# FASCICULE DE BREVET EUROPEEN

(11) **EP 2 499 014 B1**
(45) Date de publication et mention de la délivrance du brevet: **29.03.2017**
(21) Numéro de dépôt: 10787000.8
(22) Date de dépôt: 04.11.2010
(51) Int. Cl.: B60K 37/00, G02B 27/01

(54) **DISPOSITIF D'AFFICHAGE, NOTAMMENT POUR VÉHICULE AUTOMOBILE**
ANZEIGEVORRICHTUNG, IM BESONDEREN FÜR EIN KRAFTFAHRZEUG
DISPLAY DEVICE, IN PARTICULAR FOR A MOTOR VEHICLE

(30) Priorité: 11.11.2009 DE 102009052850; 17.09.2010 FR 1003698
(43) Date de publication de la demande: 19.09.2012
(73) Titulaire: Johnson Controls Technology Company, Holland, MI 49423 (US)
(72) Inventeur: ALLIOT, Patrick, 78230 Le Pecq (FR)
(74) Mandataire: Schwöbel, Thilo K.
(86) Numéro de dépôt international: PCT/EP2010/006708
(87) Numéro de publication internationale: WO 2011/057736

(56) Documents cités:
- EP-A1- 0 194 196
- WO-A1-98/28649
- US-A- 5 204 666

## Description

La présente invention concerne un dispositif d'affichage, notamment pour véhicule automobile

Des dispositifs d'affichage de type tête haute (HUD, head up display) sont connus, notamment avec la projection d'une image vers un pare brise comme décrit dans le document US 2002/0114147 A1.

Par ailleurs, il est connu de prévoir un dispositif d'affichage tel que la position du dispositif d'affichage peut être changée en fonction de la position du volant d'un véhicule telle comme décrit dans le document DE 10 2005 032 706 A1.

Un inconvénient de tels dispositifs, selon l'art connu, consiste dans le fait que les mécanismes permettant la variation de la position du dispositif d'affichage en fonction de la position du volant sont relativement compliqué et, par la suite, complexes et onéreux.

Le document US-A1-5204666, qui est considéré comme l'état de la technique le plus proche, divulgue
un dispositif d'affichage, notamment pour véhicule automobile, comprenant
-- un module d'affichage de type tête basse, et
-- un module d'affichage de type tête haute,
le dispositif d'affichage comprenant un moyen de réglage telle que la position au moins du module d'affichage de type tête haute est réglable, l'inclinaison au moins du module d'affichage de type tête haute est réglable par rapport à un axe de réglage perpendiculaire à la direction normale de regard.

La présente invention a notamment pour but de palier aux inconvénients de l'art connu, et notamment ceux cités ci-dessus, et a également pour but de proposer un dispositif d'affichage qui permet un réglage d'un dispositif d'affichage suivant les besoins d'un utilisateur, notamment d'un conducteur de véhicule.

Suivant la présente invention, ce but est atteint par un dispositif d'affichage selon la revendication 1.

De par une telle réalisation d'un dispositif d'affichage, il est avantageusement possible de modifier la position de l'image vue par l'utilisateur du dispositif d'affichage de manière simple et efficace.

De par une telle réalisation d'un dispositif d'affichage, il est avantageusement possible qu'à travers une simple rotation ou un simple changement d'inclinaison il est possible de faire varier la position de l'image vue par l'utilisateur du dispositif d'affichage.

Un autre perfectionnement préféré de l'invention réside dans le fait que l'inclinaison au moins du module d'affichage de type tête haute est réglable en fonction de la hauteur de la position de vue d'un utilisateur du dispositif d'affichage.

De par une telle réalisation d'un dispositif d'affichage, il est avantageusement possible que l'utilisation du dispositif d'affichage peut être rendu plus confortable pour des utilisateurs, notamment des conducteurs, ayant une taille différente.

De par une telle réalisation d'un dispositif d'affichage, il est avantageusement possible de régler non seulement l'inclinaison du module d'affichage de type tête haute, mais aussi l'inclinaison du module d'affichage de type tête basse, c'est à dire, il est possible de varier l'inclinaison des deux modules d'affichage du dispositif d'affichage. Suivant une réalisation préféré de la présente invention, la variation de l'inclinaison du module d'affichage de type tête haute peut être prévue de façon indépendante de la variation de l'inclinaison du module d'affichage de type tête basse. Suivant une autre réalisation préféré de la présente invention, la variation de l'inclinaison du module d'affichage de type tête haute est liée à la variation de l'inclinaison du module d'affichage de type tête basse.

Un perfectionnement particulièrement préféré de l'invention réside dans le fait qu'une variation de l'inclinaison du module d'affichage de type tête haute et du module d'affichage de type tête basse est prévue telle que non seulement l'inclinaison du module d'affichage de type tête haute est changée mais encore l'inclinaison du module d'affichage de type tête basse est changée.

De par une telle réalisation d'un dispositif d'affichage, il est avantageusement possible de varier et l'inclinaison du module d'affichage de type tête haute et l'inclinaison du module d'affichage de type tête basse.

Un autre perfectionnement préféré de l'invention réside dans le fait que lors d'une variation de l'inclinaison du module d'affichage de type tête haute et du module d'affichage de type tête basse, le changement d'inclinaison du module d'affichage de type tête haute et le changement d'inclinaison du module d'affichage de type tête basse sont égales.

De par une telle réalisation d'un dispositif d'affichage, il est avantageusement possible de faire varier l'inclinaison du module d'affichage de type tête haute et du module d'affichage de type tête basse en parallèle.

Un perfectionnement particulièrement préféré de l'invention réside dans le fait que
-- le module d'affichage de type tête basse est positionné plus proche d'un utilisateur du dispositif d'affichage, que
-- le module d'affichage de type tête haute est positionné plus éloigné de l'utilisateur du dispositif d'affichage,
et que l'axe de réglage est prévue entre le module d'affichage de type tête basse et le module d'affichage de type tête haute.

De par une telle réalisation d'un dispositif d'affichage, il est avantageusement possible de réaliser le dispositif d'affichage de façon peu complexe, peu couteux et stable.

Un autre perfectionnement préféré de l'invention réside dans le fait que le module d'affichage de type tête basse comprend au moins une surface d'affichage avec une aiguille mobile ou avec un élément d'affichage numérique.

Un perfectionnement particulièrement préféré de l'invention réside dans le fait que le module d'affichage de type tête basse comprend un premier module d'affichage de type tête basse et un deuxième module d'affichage de type tête basse.

D'autres caractéristiques et avantages de l'invention ressortiront de la lecture de la description qui suit d'un mode de réalisation particulier non limitatif de la présente invention.

### Brève description des dessins

L'invention sera mieux comprise grâce à la description ci-après, qui se rapporte à des modes de réalisation préférés, donnés à titre d'exemple non limitatifs et expliqués avec références aux dessins schématiques annexés, dans lesquels :
la figure 1 est une vue schématique de face d'un dispositif d'affichage selon la présente invention,
la figure 2 est une vue schématique latérale d'un dispositif d'affichage selon la présente invention positionné dans une première position, et
la figure 3 est une vue schématique latérale d'un dispositif d'affichage selon la présente invention positionné dans une deuxième position.

### Description des dessins

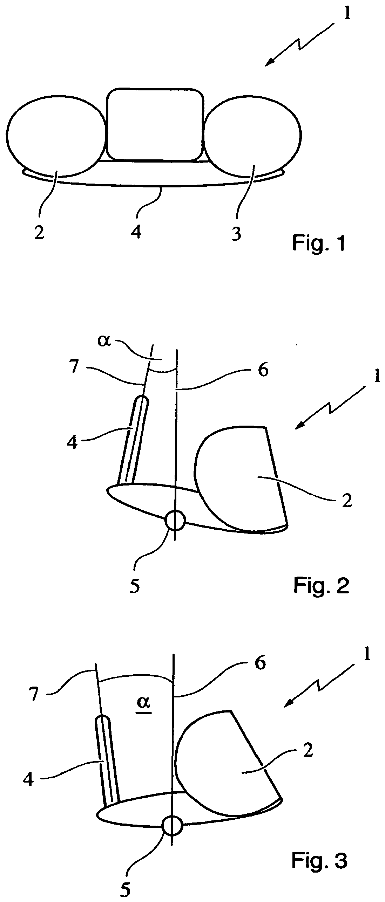

Comme le montre la figure 1 du dessin annexé, un dispositif d'affichage 1 selon la présente invention comprend un premier module d'affichage de type tête basse 2, un deuxième module d'affichage de type tête basse 3, et un module d'affichage de type tête haute 4. Typiquement, le module d'affichage de type tête haute 4 comprend un module de projection et un élément de réflexion (non représentés en détail). Typiquement, l'élément de réflexion est positionné dans une direction normale de regard. La direction normale de regard est la direction de vue d'un utilisateur du dispositif d'affichage 1, notamment un conducteur de véhicule, lorsque celui-ci regarde, notamment à travers un pare brise, l'extérieur qui se trouve devant le véhicule. Typiquement, l'élément de réflexion est prévu pour réfléchir au moins partiellement une image provenant du module de projection dans la direction normale de regard. L'élément de réflexion peut être un miroir semi-transparent, c'est à dire un élément optique qui permet à l'utilisateur du dispositif d'affichage 1, notamment un conducteur de véhicule, de voir non seulement l'extérieur qui se trouve devant le véhicule à travers l'élément de réflexion mais aussi l'image qui est générée dans le module de projection. De telles dispositifs d'affichage sont couramment connus sous le nom de dispositifs d'affichage de type tête haute (HUD, head up display).

Suivant la présente invention, le dispositif d'affichage 1 comprend au moins un module d'affichage de type tête basse 2, 3, notamment pour afficher de manière analogue ou de manière numérique des informations comme - par exemple - la vitesse du véhicule ou le nombre de tours du moteur du véhicule ou la gauge d'essence. Par exemple, le premier module d'affichage de type tête basse 2 est positionné à gauche pour afficher la vitesse du véhicule et le deuxième module d'affichage de type tête basse 3 est positionné à droite pour afficher le nombre de tours du moteur.

Selon la présente invention, la position du dispositif d'affichage est - au moins partiellement - réglable, notamment l'inclinaison au moins du module d'affichage de type tête haute 4 par rapport à un axe de réglage 5 perpendiculaire à la direction normale de regard de l'utilisateur. Ceci est réalisé par un moyen de réglage permettant la variation de l'inclinaison au moins du module d'affichage de type tête haute par rapport à l'axe de réglage 5. De préférence, la variation de l'inclinaison au moins du module d'affichage de type tête haute 4 peut être réalisé par l'utilisateur en fonction de la hauteur de la position de vue de l'utilisateur, c'est à dire notamment en fonction de la taille de l'utilisateur.

Dans la figure 2, une vue schématique latérale du dispositif d'affichage 1 selon la présente invention est représentée, le dispositif d'affichage 1 étant positionné dans une première position correspondant notamment à une taille plus petite du conducteur du véhicule. Dans la figure 3, une vue schématique latérale du dispositif d'affichage 1 selon la présente invention est représentée, le dispositif d'affichage 1 étant positionné dans une deuxième position correspondant notamment à une taille plus grande du conducteur du véhicule.

Dans l'exemple représenté du dispositif d'affichage 1, l'inclinaison du module d'affichage de type tête haute 4 est réalisé à travers un changement de l'inclinaison de l'ensemble du dispositif d'affichage 1 par rapport à l'axe 5. Ceci implique qu'un changement de l'inclinaison du module d'affichage de type tête haute 4 et un changement de l'inclinaison du module d'affichage de type tête basse 2, 3 est prévu en parallèle. Il est possible selon la présente invention, que l'inclinaison (ou la position) du module d'affichage de type tête haute 4 peut être change de façon indépendante de l'inclinaison (ou la position) du module d'affichage de type tête basse 2, 3.

L'inclinaison du module d'affichage de type tête haute 4 peut - par exemple - être défini par un angle α entre la verticale 6 et le plan 7 du module d'affichage de type tête haute 4.

Dans sa deuxième position (figure 3), le dispositif d'affichage 1 est - par exemple - incliné de 30° par rapport à sa première position (figure 2).

Le changement de l'inclinaison du module d'affichage de type tête haute 4 (ensemble avec l'inclinaison du module d'affichage de type tête basse 2, 3 ou indépendamment de l'inclinaison du module d'affichage de type tête basse 2, 3) peut être prévu de façon manuelle ou à l'aide d'un moteur (ou automatique).

## Revendications

1. Dispositif d'affichage (1), notamment pour véhicule automobile, comprenant
-- un module d'affichage de type tête basse (2, 3), et
-- un module d'affichage de type tête haute (4),
le dispositif d'affichage (1) comprenant un moyen de réglage telle que la position au moins du module d'affichage de type tête haute (4) est réglable, l'inclinaison au moins du module d'affichage de type tête haute (4) étant réglable par rapport à un axe de réglage (5) perpendiculaire à la direction normale de regard, le moyen de réglage étant prévu de façon à ce que
-- l'inclinaison du module d'affichage de type tête haute (4) et
-- l'inclinaison du module d'affichage de type tête basse (2, 3)
sont réglables par rapport à l'axe de réglage (5).

2. Dispositif d'affichage (1) selon la revendication 1, **caractérisé en ce que** l'inclinaison au moins du module d'affichage de type tête haute (4) est réglable en fonction de la hauteur de la position de vue d'un utilisateur du dispositif d'affichage (1).

3. Dispositif d'affichage (1) selon l'une quelconque des revendications précédentes, **caractérisé en ce qu'**une variation de l'inclinaison du module d'affichage de type tête haute (4) et du module d'affichage de type tête basse (2, 3) est prévue telle que non seulement l'inclinaison du module d'affichage de type tête haute (4) est changée mais encore l'inclinaison du module d'affichage de type tête basse (2, 3) est changée.

4. Dispositif d'affichage (1) selon l'une quelconque des revendications précédentes, **caractérisé en ce que** lors d'une variation de l'inclinaison du module d'affichage de type tête haute (4) et du module d'affichage de type tête basse (2, 3), le changement d'inclinaison du module d'affichage de type tête haute (4) et le changement d'inclinaison du module d'affichage de type tête basse (2, 3) sont égales.

5. Dispositif d'affichage (1) selon l'une quelconque des revendications précédentes, **caractérisé en ce que**
-- le module d'affichage de type tête basse (2, 3) est positionné plus proche d'un utilisateur du dispositif d'affichage (1), que
-- le module d'affichage de type tête haute (4) est positionné plus éloigné de l'utilisateur du dispositif d'affichage (1),
et que l'axe de réglage (5) est prévue entre le module d'affichage de type tête basse (2, 3) et le module d'affichage de type tête haute (4).

6. Dispositif d'affichage (1) selon l'une quelconque des revendications précédentes, **caractérisé en ce que** le module d'affichage de type tête basse (2, 3) comprend au moins une surface d'affichage avec une aiguille mobile ou avec un élément d'affichage numérique.

7. Dispositif d'affichage (1) selon l'une quelconque des revendications précédentes, **caractérisé en ce que** le module d'affichage de type tête basse (2, 3) comprend un premier module d'affichage de type tête basse (2) et un deuxième module d'affichage de type tête basse (3).

## Patentansprüche

1. Anzeigevorrichtung (1), insbesondere für ein Kraftfahrzeug, die enthält
- ein Anzeigemodul der Art Head-Down-Display (2, 3), und
- ein Anzeigemodul der Art Head-Up-Display (4), wobei die Anzeigevorrichtung (1) eine derartige Einstelleinrichtung enthält, dass die Stellung mindestens des Anzeigemoduls der Art Head-Up-Display (4) einstellbar ist, wobei die Neigung mindestens des Anzeigemoduls der Art Head-Up-Display (4) bezüglich einer Einstellachse (5) lotrecht zur normalen Blickrichtung einstellbar ist, wobei die Einstelleinrichtung so vorgesehen ist, dass
- die Neigung des Anzeigemoduls der Art Head-Up-Display (4) und
- die Neigung des Anzeigemoduls der Art Head-Down-Display (2, 3)
bezüglich der Einstellachse (5) einstellbar sind.

2. Anzeigevorrichtung (1) nach Anspruch 1, **dadurch gekennzeichnet, dass** die Neigung mindestens des Anzeigemoduls der Art Head-Up-Display (4) abhängig von der Höhe der Sehstellung eines Benutzers der Anzeigevorrichtung (1) einstellbar ist.

3. Anzeigevorrichtung (1) nach einem der vorhergehenden Ansprüche, **dadurch gekennzeichnet, dass** eine Veränderung der Neigung des Anzeigemoduls der Art Head-Up-Display (4) und des Anzeigemoduls der Art Head-Down-Display (2, 3) so vorgesehen ist, dass nicht nur die Neigung des Anzeigemoduls der Art Head-Up-Display (4) geändert wird, sondern auch die Neigung des Anzeigemoduls der Art Head-Down-Display (2, 3) geändert wird.

4. Anzeigevorrichtung (1) nach einem der vorhergehenden Ansprüche, **dadurch gekennzeichnet, dass** bei einer Veränderung der Neigung des Anzeigemoduls der Art Head-Up-Display (4) und des Anzeigemoduls der Art Head-Down-Display (2, 3) die Neigungsänderung des Anzeigemoduls der Art Head-Up-Display (4) und die Neigungsänderung des Anzeigemoduls der Art Head-Down-Display (2, 3) gleich sind.

5. Anzeigevorrichtung (1) nach einem der vorhergehenden Ansprüche, **dadurch gekennzeichnet, dass**
- das Anzeigemodul der Art Head-Down-Display (2, 3) näher bei einem Benutzer der Anzeigevorrichtung (1) positioniert ist, dass
- das Anzeigemodul der Art Head-Up-Display (4) weiter weg vom Benutzer der Anzeigevorrichtung (1) positioniert ist,
und dass die Einstellachse (5) zwischen dem Anzeigemodul der Art Head-Down-Display (2, 3) und dem Anzeigemodul der Art Head-Up-Display (4) vorgesehen ist.

6. Anzeigevorrichtung (1) nach einem der vorhergehenden Ansprüche, **dadurch gekennzeichnet, dass** das Anzeigemodul der Art Head-Down-Display (2, 3) mindestens eine Anzeigefläche mit einer beweglichen Nadel oder mit einem digitalen Anzeigeelement enthält.

7. Anzeigevorrichtung (1) nach einem der vorhergehenden Ansprüche, **dadurch gekennzeichnet, dass** das Anzeigemodul der Art Head-Down-Display (2, 3) ein erstes Anzeigemodul der Art Head-Down-Display (2) und ein zweites Anzeigemodul der Art Head-Down-Display (3) enthält.

## Claims

1. Display device (1), notably for an automobile vehicle, comprising
- a display module of the head down type (2, 3), and
- a display module of the head up type (4),
the display device (1) comprising an adjustment means such that the position at least of the display module of the head up type (4) is adjustable, the inclination at least of the display module of the head up type (4) being adjustable with respect to an adjustment axis (5) perpendicular to the normal viewing direction, the adjustment means being designed such that
- the inclination of the display module of the head up type (4) and
- the inclination of the display module of the head down type (2, 3)
are adjustable with respect to the adjustment axis (5).

2. Display device (1) according to Claim 1, **characterized in that** the inclination at least of the display module of the head up type (4) is adjustable according to the height of the viewing position of a user of the display device (1).

3. Display device (1) according to either of the preceding claims, **characterized in that** a variation of the inclination of the display module of the head up type (4) and of the display module of the head down type (2, 3) is designed such that not only the inclination of the display module of the head up type (4) is changed, but also the inclination of the display module of the head down type (2, 3) is changed.

4. Display device (1) according to any one of the preceding claims, **characterized in that**, when the inclination of the display module of the head up type (4) and of the display module of the head down type (2, 3) is varied, the change in inclination of the display module of the head up type (4) and the change in inclination of the display module of the head down type (2, 3) are equal.

5. Display device (1) according to any one of the preceding claims, **characterized in that**
- the display module of the head down type (2, 3) is positioned nearer to a user of the display device (1), that
- the display module of the head up type (4) is positioned further away from the user of the display device (1),
and that the adjustment axis (5) is designed to be between the display module of the head down type (2, 3) and the display module of the head up type (4).

6. Display device (1) according to any one of the preceding claims, **characterized in that** the display module of the head down type (2, 3) comprises at least one display surface with a mobile needle or with a numerical display element.

7. Display device (1) according to any one of the preceding claims, **characterized in that** the display module of the head down type (2, 3) comprises a first display module of the head down type (2) and a second display module of the head down type (3).
